# EUROPEAN PATENT SPECIFICATION

(11) **EP 1 387 758 B1**
(45) Date of publication and mention of the grant of the patent: **04.02.2009**
(21) Application number: 02726294.8
(22) Date of filing: 17.05.2002
(51) Int. Cl.: B29C 70/02, B29C 70/48, B29C 70/86, E02D 29/14

(54) **METHOD OF PRODUCING AN ANTI-SLIP SURFACE**
VERFAHREN ZUR HERSTELLUNG EINER RUTSCHSICHEREN OBERFLÄCHE
PROCEDE POUR LA FABRICATION D'UNE SURFACE ANTIDERAPANTE

(30) Priority: 18.05.2001 GB 0112139
(43) Date of publication of application: 11.02.2004
(73) Proprietor: Newton, John Reginald, Grange-Over-Sands LA11 7QS (GB)
(72) Inventor: Newton, John Reginald, Grange-Over-Sands LA11 7QS (GB)
(74) Representative: Browne, Robin Forsythe
(86) International application number: PCT/GB2002/002164
(87) International publication number: WO 2002/094540

(56) References cited:
- GB-A- 1 545 471
- US-A- 2 109 287
- US-A- 5 344 601
- US-A- 5 380 549

## Description

This invention relates to a method of producing an anti-slip surface and in particular to the provision of anti-slip surfaces to manhole covers and the like.

In recent years there has become an increasing awareness of the need to provide road and pavement surfaces with good anti slip properties. This is particularly relevant in areas used by pedestrians but also equally applies to areas subject to vehicular traffic. Motor cycles and bicycles are particularly vulnerable to surfaces with poor anti slip properties.

As we move towards an increasingly litigious society, the bodies responsible for our roads and walkways are ever more frequently paying out large sums of money in compensation claims for incidents where people have slipped, or had some form of accident, whose root cause could be traced to a surface with poor anti skid properties.

The present invention seeks to provide a method of creating a high quality anti slip surface on an existing surface which does not have the physical properties essential to produce the desired degree of slip resistance.

People are prone to slip when there is a sudden change in the slip resistance value of the surface they are walking on. This occurs because we adjust our stride pattern to compensate for the characteristics of the surface we find ourselves on. If we are on ice, our biological feedback system tells us to shorten our stride and slowdown the rate at which we change direction. By doing this we are able to walk on a surface with very low coefficient of friction, i. e. poor anti skid properties.

The human body is adept at making these adjustments but gets into difficulty when it experiences a sudden change in the skid resistance of a surface. A typical example occurs when a person walks along a pavement and steps onto a manhole cover. The material of a typical pavement may have a skid resistance value of 60 as measured on a Stanley Skid Resistance Tester (a standard test of skid resistance). However, the manhole cover could well have a value of only 35. It is generally recognised that a 'safe' value is 40 or more. The sudden change in value can result in an accident for the pedestrian, as it can for a cyclist or motor cyclist. The conclusion of this analysis is, that as close as can be achieved, the surfaces we walk and ride on should have the same anti skid value, and that the value should be 40 or more.

Road and pavement surfaces normally have good anti slip properties but it is the items found In these, such as manhole covers, which represent a danger owing to their poor anti slip properties. The most common material in use for these covers is cast iron. When first cast, a cast iron cover has a rough surface providing plenty of grip; however, this is only a temporary situation as a combination of corrosion and the polishing action of wear combine to produce a smooth surface. This polished surface must therefore rely on its value of coefficient of friction-which varies according to the materials that come into contact with it-in order to provide the anti skid resistance. Unfortunately the normal materials coming into contact with access covers, such as rubber and leather, particularly when there is water involved, have a low coefficient of friction.

Manufacturers of cast iron covers have provided tread patterns on the surface to provide two characteristics. Treads allow surface water to be channelled away from the mating surface in contact with the cover and this is highly desirable, particularly when high speed traffic is passing over the cover. Treads are also thought to provide anti slip properties but in reality they do not.

For a tread to function as a mechanism to improve skid resistance, the mating surface, would have to be sufficiently compliant to deform around the tread, so that mechanical grip could be achieved to levels that were significant. In reality this does not happen because the surfaces of tyres and shoes, will not deform on a scale sufficient to provide anything other than the smallest amount of mechanical grip. If they did, then the edges of the tread would wear and reduce the advantage gained.

To achieve anti skid properties, which can be maintained over the normal working life of the product, it is necessary to employ a material for the surface that has a coefficient of friction of sufficient value that an anti skid value in the region of 60 (as measured on the Stanley Skid Resistance Tester) can be achieved. It has been established that cast iron, steel and both thermosetting and thermoplastic plastic materials do not normally provide an adequate value of coefficient of friction to achieve the skid resistance desired.

One known method of providing a non-slip surface is disclosed in GB 1 545 471. However, in this method, the non-slip surface is manufactured on a substrate such a a pavement (or sidewalk) by bonding a preformed panel made of a fabric backing material coated with a resin adhesive composition having an aggregate within it.

In accordance with the present invention, however, there is provided a method of producing an anti-slip surface on a component having a surface, which comprises providing a mould half, the mould half having edges capable of achieving a seal with the component onto which the anti-slip surface is to be applied, whereby the component provides a half of the mould, the first mould half having a mould surface including detail for defining a tread pattern on the anti slip surface, providing a layer of fibre reinforcement, and an adjacent layer of a mineral material, clamping the component and the mould half together, and injecting a resin into the mould so as to bind the fibre reinforcement and the mineral material with a resin matrix onto the component surface with a tread pattern being formed on the anti-slip surface so formed.

Particular embodiments of the invention are the subject of the dependent claims.

Preferably, materials which have the desired coefficient of friction values are mineral based. Of these, it is preferred to use calcined bauxite since it has two very specific properties. Its hardness is equivalent to that of a ruby and is therefore nearly as hard as diamond. Of the materials used for road surfaces it has the greatest resistance to polishing and hence retains sharp edges. This material has already found application on roads where it is used in areas requiring high levels of anti skid such as entrances to roundabouts and at pedestrian crossings.

This invention conveniently provides a method of surfacing components, for example items like a manhole cover, with a fine aggregate of calcined bauxite, in a way that allows precision application, preferably so that tread patterns can be incorporated in to the surface.

By incorporating a layer of fibre reinforced resin, the integrity of the bond between the base material of the component and the surface created with aggregate is not compromised during the life of the product. Thus the invention differs from the simple application of a coating to a component; the layers integrate to provide structural strength which resists peeling, de-laminating, or the like. The layers are preferably thick enough to take a tread pattern themselves.

Additional, it is possible to incorporate other materials into the surface, e. g. reflective materials so that the surface stands out in vehicle headlights.

In one embodiment of the invention, the top surface of a cast iron manhole cover has a lip around its outer edge thus creating a shallow recess. One or more layers of glass fibre laminate are placed in the bottom of this recess and over these a fine grade of calcined bauxite aggregate is placed so that the recess is filled to the point of being level with the top of the lip.

The cast iron cover is now used as the lower half of a mould. A top mould half is provided having the internal detail to form a tread pattern in the aggregate, and the edges are capable of achieving a seal with the cover. The top mould half also has means to connect an injection gun to supply a matrix resin under pressure, create a vacuum, and vent the cavity.

Preferably the cavity has a vacuum applied to it and a thermosetting resin is then injected until the cavity is completely filled. After the resin has cured, the top half of the mould is removed revealing the completed cover.

The method of the invention provides a surface containing an aggregate, that advantageously has been packed to its maximum packing density, and bonded together with a very tough resin. Indeed, it is an advantage of the invention, in that resin is injected after the aggregate has been placed in the mould, that maximum packing density of the aggregate can be achieved, which is not possible where aggregate in a liquid medium is applied as a coating. Within the surface there may be a tread pattern, and located below the bottom of the recesses of this pattern is a highly reinforced layer of glass fibre composite. The function of the latter is primarily to link the blocks of tread together and hence prevent them being peeled from the surface of the cover. Secondly it helps strengthen the bond to the cover surface by reinforcing the resin at the bond interface.

Tread patterns on a traditional manhole cover tend to be widely spaced, reducing the surface area in contact with the mating surface to as little as 50% or even less in some designs. A review of classical treatment of friction theory states that *'the friction force is independent of the area of contact between the surfaces'.* However, the theory is only applicable when the stress produced across the contact surfaces is not sufficient to cause penetration of one surface into the other. In the present circumstances there is typically a relatively soft material being deformed into the extremely hard surface of the cover. Hence the greater the area of surface available the greater the anti slip properties. It is therefore apparent that any grooves formed into the cover surface should reduce the surface area by a minimum, yet still provide effective water removal. It is considered that for applications involving fast moving vehicles the surface area of the grooves should be in the region of 20% of the surface area. In pedestrian applications the equivalent value may be lower, e.g. about 10%.

A surface of the type described on the component treated according to the invention, has been shown typically to have an anti skid values of better than 65, as measured on the Stanley Tester. Moreover, the values did not fall below this level when the surface was subjected to accelerated wear testing. Such a surface corresponds extremely well with known anti skid values of road and pavements.

The invention further includes the component having anti-slip surface in accordance with the invention.

The invention will be described further, by way of example, with reference to the accompanying drawings, in which:
Figure 1 is a partial sectional view of a cast iron manhole cover treated in accordance with the invention;
Figure 2 is a similar view to figure 1 wherein a steel fabrication is treated;
Figure 3 illustrates the moulding process corresponding to Figure 1;
Figure 4 illustrates the mould process corresponding to Figure 2;
Figure 5 is an isometric view of two components which when fitted together form an access cover;
Figure 6 is a cross-sectional view of the components of Figure 5 when fitted together; and
Figure 7 is a similar view to Figure 6 with the anti-slip surface moulded in place

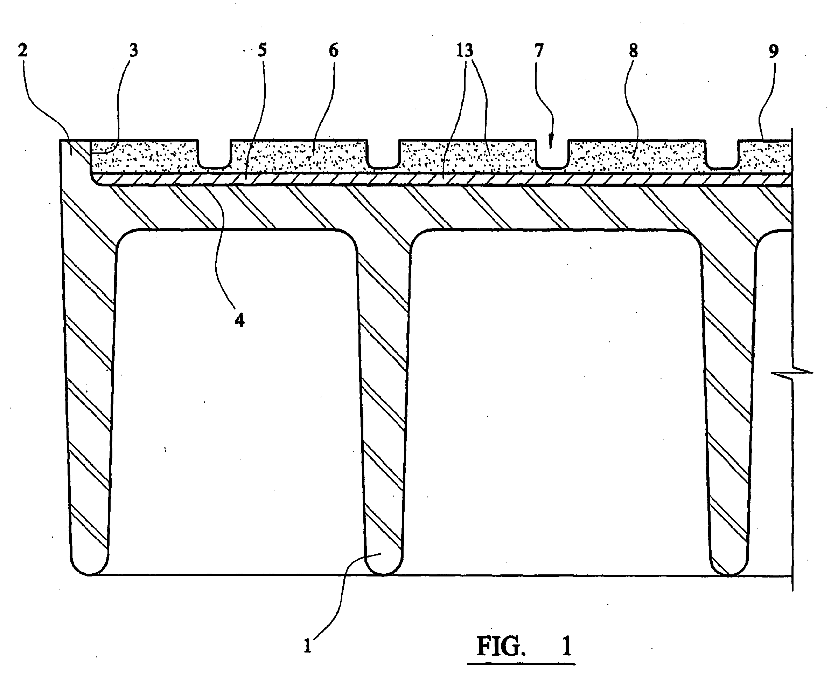

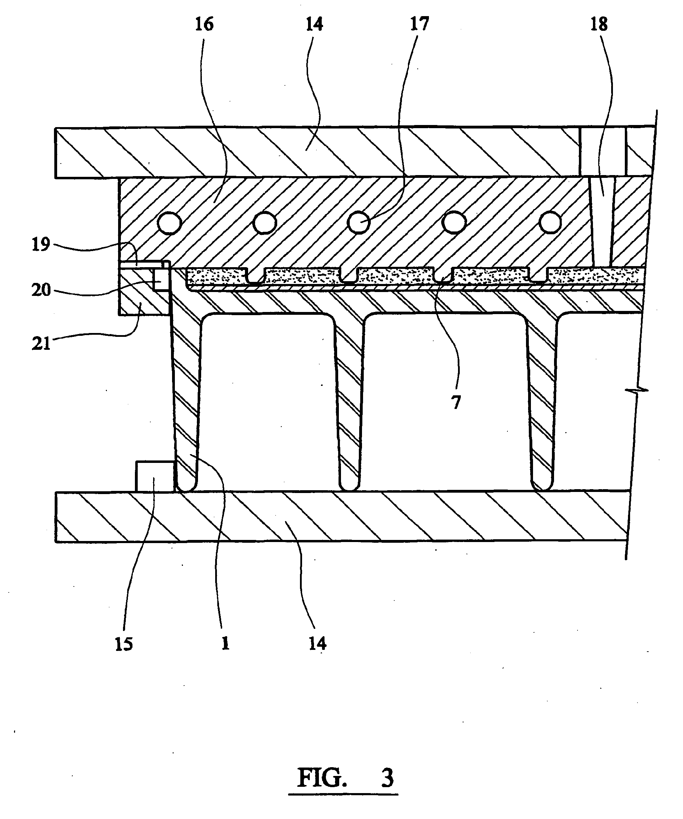

Referring to the drawings, and in particular Figures 1 and 3, a cast iron manhole cover 1 is shown with a lip 2 around its top edge which provides a recess 3 within the top face 4 of the cover. Within the recess 3 are several layers of glass fibre laminate 5 overlaid with a fine grade of calcined bauxite aggregate 6 which is packed to its maximum density. The laminate 5 and the aggregate 6 have been impregnated with a matrix resin 13 whose function is to bond both together whilst simultaneously bonding them to the top surface of the casting 4. A preferred matrix resin 13 would be an acrylic, typically Modar, owing to its excellent adhesive and hardness properties. Detailed in the top surface are a series of grooves 7 which define a tread pattern 8 on the upper surface 9.

The anti skid surface is moulded using the component, i.e. the cover 1, as one half of the mould and in the case where the component has a recess 3 constructed in its surface to receive the anti skid material then the mould construction may be as shown in fig 3. The cover 1 is supported by a press platen 14 and positioned by location blocks 15. A mould top section 16 defines the ultimate top face configuration of the component including the grooves 7, A series of holes 17 provide a water jacket for temperature control, since the component is preheated prior to moulding. The mould 16 is equipped with am injection port 18, vent 19 through which a vacuum can be drawn in addition to venting the cavity, and seal 20 which seals the component to the mould 16. A housing 21 supports and compresses the seal 20, and the mould top section 16 is supported and clamped by the press platens 14.

Resin 13 is then injected into both the fibre layer and the mineral layer bonding both together intimately.

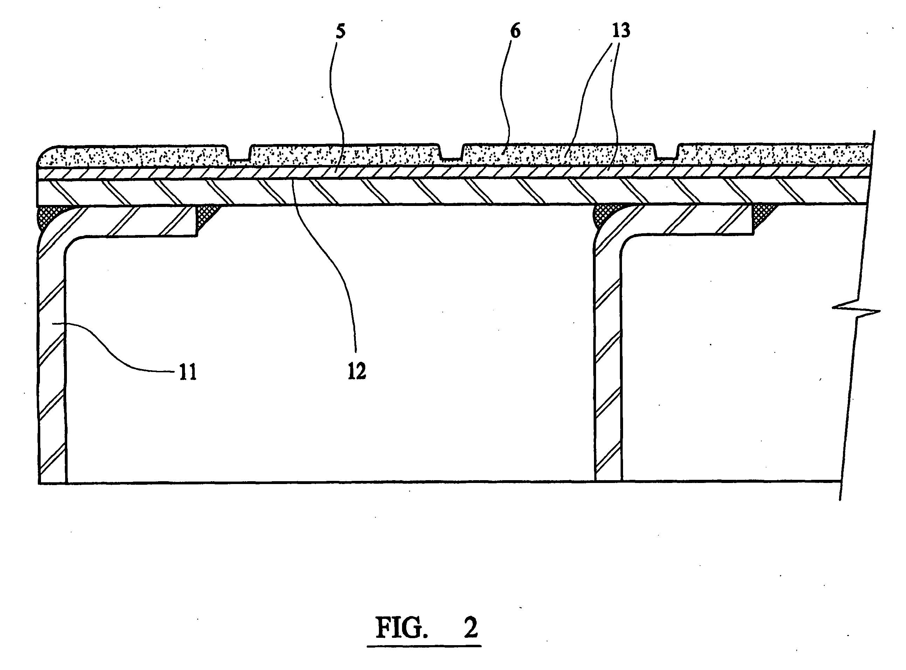

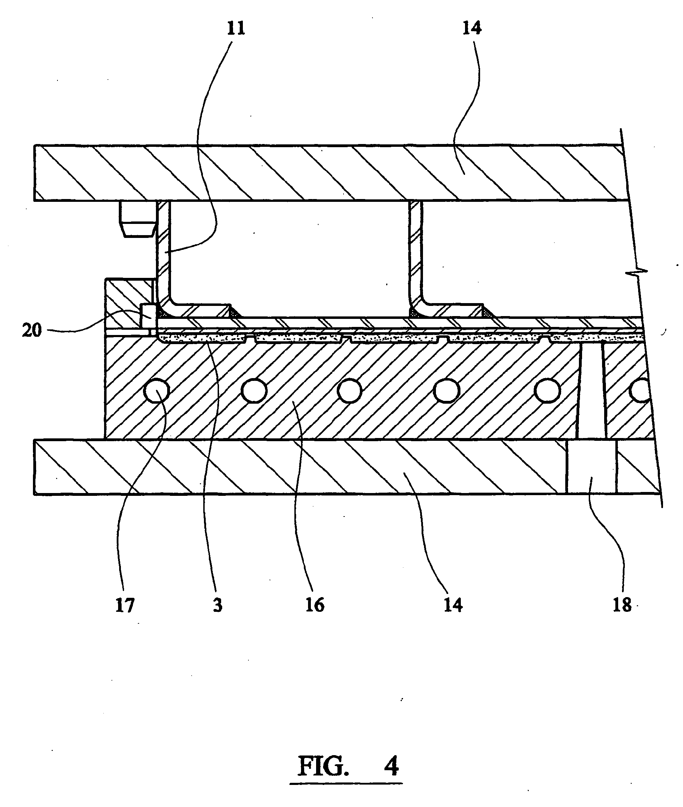

Figures 2 and 4 illustrate the method of the invention applied to steel fabrications, and a typical construction is shown in fig 2. Like numerals are used for like parts. A fabrication 11 has several layers of glass fibre laminate 5 overlaid with a fine grade of calcined bauxite aggregate 6 on its top surface 12. As before the layers are bonded together by a matrix resin.13.

Since there is no recess 3 present, then the face of the mould 16 is modified. (Figure 4). In this configuration, the mould half 16 becomes the lower part of the mould and the component 11 is turned through 180 degrees and in effect becomes the top half of the mould. The mould halves are located and clamped together by press platens 14, and resin as injected, as before.

The process of injecting a matrix resin through the glass composite layer and compacted aggregate gives considerable added strength to the component and, in accordance with a further embodiment of the invention, can be used to bond elements of a fabricated component together, in some cases eliminating or reducing welding, thereby simplifying construction and reducing costs. Such a structure would typically be made from steel or aluminium.

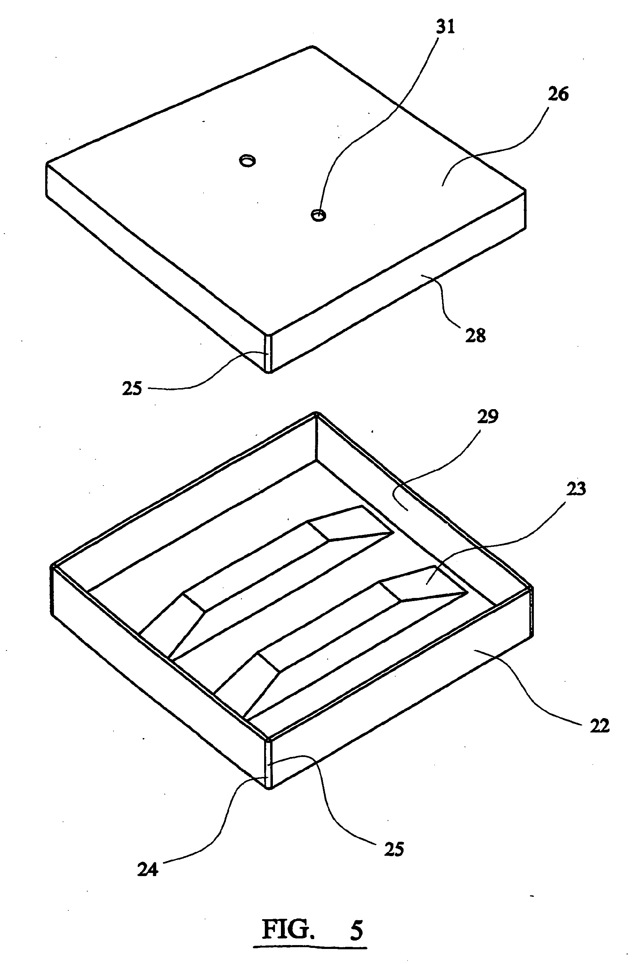

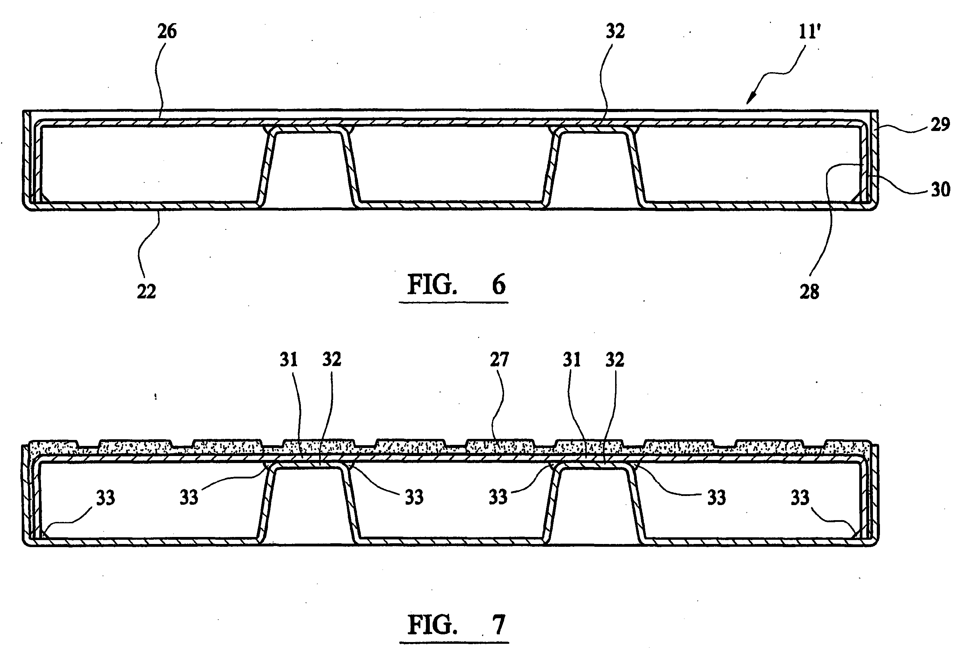

Turning now to Figures 5 to 7, such a structure is illustrated. A fabricated access cover 11' is made up of a lower pan 22 containing two stiffening ribs 23. The corners 24 of the the pan 22 are sealed with a sealant 25, e.g. Detaflex. An upper pan 26 fits within the lower pan 22 as best seen in Figure 6. The sides 28 of the upper pan 26 are sealed at the four corners 24 with the sealant 25.

The upper pan 26 is provided with two holes 31 which correspond to the centres of the ribs 23 of the lower pan 22.

A mould half is supplied as before and resin injected into a layer of fibreglass and aggregate on the top surface of pan 26 (Figure 7). The holes 31 ensure that resin penetrates and forms a bond line 32 between the ribs 23 and the pan 26. The resin also penetrates between the sides of the upper and lower pans and forms a bond 30 between the two. This ensures that the two pans are bonded together at the same time as moulding the surface, eliminating welds. In order to confine penetration of the matrix resin to the selected bond lines, it is necessary to seal the edges adjacent the bond lines with a sealant or soft rubber seal 33.

Advantages of the anti skid surfacing technology of the invention include:
1. It provides a contact surface on a component with a high coefficient of friction and hence values of anti skid comparable to high quality road and pavement surfaces;
2. The surface will retain its anti skid values throughout its product life;
3. Calcined bauxite aggregate is the preferred primary constituent of the surface and it is configured in its maximum packing density;
4. The anti slip surface is bonded and structurally reinforced onto the component, thereby providing a precise tread pattern with the appropriate water dispersal characteristics.

## Claims

1. A method of producing an anti-slip surface (9) on a component (1) having a surface (4), which comprises:
providing a mould half (16), the mould half (16) having edges capable of achieving a seal with the component (1) onto which the anti-slip surface is to be applied, whereby the component (1) provides a half of the mould, the first mould half (18) having a mould surface including detail (7) for defining a tread pattern (8) on the anti slip surface (9);
providing a layer of fibre reinforcement (5), and an adjacent layer of a mineral material (6);
clamping the component (1) and the mould half (16) together, and
injecting a resin (13) into the mould so as to bind the fibre reinforcement (5) and the mineral material (6) with a resin matrix onto the component surface (4) with a tread pattern (8) being formed on the anti-slip surface (9) so formed.

2. A method as claimed in claim 1 wherein the mineral material is calcined bauxite.

3. A method as claimed in either of claims 1 or 2 wherein the fibre reinforcement comprise glass fibre.

4. A method as claimed in any of claims 1 to 3 wherein the component is a cast iron manhole cover having a lip around its outer edge thus creating a shallow recess and one or more layers of glass fibre laminate are placed in the bottom of this recess and over these a fine grade of calcined bauxite aggregate is placed so that the recess is filled to the point of being level with the top of the lip, after which the mould half is placed over the recess and the resin injected.

5. A method as claimed in claim 4 wherein the mould cavity has a vacuum applied to it and the matrix resin is then injected until the cavity is completely filled.

6. A method as claimed in any of claims 1 to 5 wherein the aggregate is packed to its maximum packing density.

7. A method as claimed in any of claims 1 to 6 wherein the component is fabricated and the resin matrix forms some or all of the bond between the component parts.

8. A method as claimed in any of claims 1 to 7 wherein the resin is a thermosetting resin.

## Patentansprüche

1. Verfahren zur Herstellung einer rutschfesten Oberfläche (9) auf einer Komponente (1) mit einer Oberfläche (4), welches umfasst:
Vorsehen einer Formhälfte (16), welche Kanten aufweist, die in der Lage sind, eine Dichtung mit der Komponente (1) zu bilden, auf der die rutschfeste Oberfläche aufzubringen ist, wobei die Komponente (1) eine Hälfte der Form bildet, und die erste Formhälfte (16) eine Formoberfläche inklusive eines Details (7) aufweist, welches ein Profilmuster (8) auf der rutschfesten Oberfläche (9) bildet,
Vorsehen einer Schicht aus einer Faserverstärkung (5) und einer angrenzenden Schicht eines Mineralmaterials (6),
Zusammenklemmen der Komponente (1) und der Formhälfte (16), und
Einführen eines Harzes (13) in die Form, um die Faserverstärkung (5) und das Mineralmaterial (6) mit der Harzmatrix auf der Komponentenoberfläche (4) zu binden, wobei ein Profilmuster (8) auf der derart geformten rutschfesten Oberfläche ausgebildet wird.

2. Verfahren nach Anspruch 1, bei dem das Mineralmaterial kalziniertes Bauxit ist.

3. Verfahren nach einem der Ansprüche 1 oder 2, bei dem die Faserverstärkung Glasfaser enthält.

4. Verfahren nach einem der Ansprüche 1 - 3, bei dem die Komponente eine gegossene Mannlochabdeckung ist, die an ihrem äußeren Umfang eine Lippe enthält, um so eine flache Vertiefung zu bilden und eine oder mehrere Schichten der Glasfaserlaminate am Boden dieser Vertiefung angeordnet sind und darüber eine feine Körnung von kalziniertem Bauxit derart angeordnet ist, dass die Vertiefung bis zur Ebene der Oberseite der Lippe aufgefüllt wird, und danach die Formhälfte über der Vertiefung angeordnet wird und das Harz injiziert wird.

5. Verfahren nach Anspruch 4, bei dem der Formraum ein aufgebrachtes Vakuum aufweist und das Matrixharz dann eingeführt wird, bis die Vertiefung komplett gefüllt ist.

6. Verfahren nach einem der Ansprüche 1 - 5, bei dem die Körnung bis zur höchsten Packungsdichte gepackt ist.

7. Verfahren nach einem der Ansprüche 1 - 6, bei dem die Komponente vorfabriziert ist und die Harzmatrix ein Teil der oder die gesamte Verbindung zwischen den Komponententeilen bildet.

8. Verfahren nach einem der Ansprüche 1 - 7, bei dem das Harz ein heißhärtendes Harz ist.

## Revendications

1. Procédé de production d'une surface antidérapante (9) sur un composant (1) comportant une surface (4), qui comprend :
la fourniture d'un demi-moule (16), le demi-moule (16) ayant des bords pouvant former un joint hermétique avec le composant (1) sur lequel la surface antidérapante doit être appliquée, grâce à quoi le composant (1) procure une moitié du moule, le premier demi-moule (16) ayant une surface de moulage comportant des éléments (7) pour délimiter une sculpture d'appui (8) sur la surface antidérapante (9) ;
l'incorporation d'une couche de fibres d'armature (5) et d'une couche adjacente d'une matière minérale (6) ;
le serrage du composant (1) et du demi-moule (16) ensemble, et
l'injection d'une résine (13) dans le moule de façon à lier l'armature de fibres (5) et la matière minérale (6) avec une matrice résineuse sur la surface (4) du composant, avec un sculpture d'appui (8) formée sur la surface antidérapante (9) ainsi produite.

2. Procédé tel que revendiqué dans la revendication 1, dans lequel la matière minérale est de la bauxite calcinée.

3. Procédé tel que revendiqué dans l'une quelconque des revendications 1 ou 2, dans lequel l'armature de fibres comprend une fibre de verre.

4. Procédé tel que revendiqué dans l'une quelconque des revendications 1 à 3, dans lequel le composant est un couvercle de trou d'homme en fonte comportant une lèvre le long de son bord extérieur en créant ainsi un creux peu profond, et une couche de stratifié de fibres de verre ou plus sont placées au fond de ce creux, et une qualité fine d'agrégats de bauxite calcinée est placée par-dessus celles-ci, de telle façon que le creux soit rempli au point d'être au niveau du haut de la lèvre, après quoi le demi-moule est placé par-dessus le creux, et la résine est injectée.

5. Procédé tel que revendiqué dans la revendication 4, dans lequel un vide est établi dans la cavité du moule, et la résine de matrice est ensuite injectée jusqu'à ce que la cavité soit complètement remplie.

6. Procédé tel que revendiqué dans l'une quelconque des revendications 1 à 5, dans lequel les agrégats sont tassés jusqu'à leur densité de tassement maximum.

7. Procédé tel que revendiqué dans l'une quelconque des revendications 1 à 6, dans lequel le composant est fabriqué, et la matrice résineuse assure une partie ou la totalité de la liaison entre les parties du composant.

8. Procédé tel que revendiqué dans l'une quelconque des revendications 1 à 7, dans lequel la résine est une résine thermodurcissable.
